# EUROPÄISCHE PATENTSCHRIFT

(11) **EP 1 415 908 B1**
(45) Veröffentlichungstag und Bekanntmachung des Hinweises auf die Patenterteilung: **25.05.2011**
(21) Anmeldenummer: 04003048.8
(22) Anmeldetag: 18.02.1999
(51) Int. Cl.: B64D 9/00, B65G 13/06

(54) **Frachtladesystem**
Cargo loading system
Système de chargement de marchandises

(30) Priorität: 20.02.1998 DE 19807231
(43) Veröffentlichungstag der Anmeldung: 06.05.2004
(62) Teilanmeldung aus: 99103205.3
(73) Patentinhaber: Telair International GmbH, 83714 Miesbach (DE)
(72) Erfinder: Huber, Thomas, 83727 Schliersee (DE)
(74) Vertreter: Bohnenberger, Johannes

(56) Entgegenhaltungen:
- DE-A1- 19 719 160
- GB-A- 2 294 672
- US-A- 4 006 815

## Beschreibung

Die Erfindung betrifft ein Frachtladesystem, wie es in Flugzeugen zum Fördern von insbesondere Containern, Paletten oder dergleichen im Frachtraum Verwendung findet.

Beim Be- und Entladen von Flugzeugen kommt es darauf an, dass die einzulagernden bzw. auszuladenden Gegenstände möglichst schnell aber sicher an ihre Plätze gebracht bzw. wieder aus dem Frachtraum heraustransportiert werden. Ein solcher Be- und Entladevorgang muss aber nicht nur in kurzer Zeit geschehen, er muss auch unter sehr unterschiedlichen Umständen erfolgen. Derartige Unterschiede liegen zum einen in der Ausgestaltung der Gegenstände selbst, die verschiedene Bodenstrukturen oder auch Befüllungsgewichte haben, sie liegen auch in der Position des Flugzeugs bzw. des Frachtdecks, das in verschiedenen Neigungswinkeln verlaufen kann, da die Standpositionen von Flugzeugen nicht immer optimal sind und auch durch die Beladungsgewichte schwanken. Weiterhin ist zu berücksichtigen, dass die Böden der zu transportierenden Gegenstände unterschiedliche Stabilität und auch Beschaffenheit hinsichtlich ihrer Rutschfestigkeit haben können. Feuchtigkeit oder Verschmutzung spielen hier eine große Rolle.

Schließlich spielt das zu Verfügung stehende Bedienungspersonal bei der hier zugrundeliegenden Problematik eine große Rolle. Um Kosten zu sparen möchte man mit möglichst wenig Personal auskommen, das darüber hinaus oftmals ungeübt ist und auch insbesondere aufgrund des Zeitdrucks unsorgfältig arbeitet.

Bei den herkömmlichen Systemen ist es zum größten Teil dem Bedienungspersonal überlassen, wie die Rollenantriebseinheiten gesteuert werden, wobei üblicherweise mit konstanten Förderparametern (insbesondere hinsichtlich Fördergeschwindigkeit, Anpressdruck der Antriebsrollen usw.) ohne Berücksichtigung der oben genannten Unterschiedlichkeiten gearbeitet wird.

Ein System, bei dem eine Messrolle ein mechanisches Signal erzeugt, durch welches eine Bremswirkung auf andere Rollen ausgelöst wird, ist in US 4 006 815 gezeigt.

Der Erfindung liegt die Aufgabe zugrunde, ein Frachtladesystem aufzuzeigen, das bei vermindertem Bedienungsaufwand den Be- und Entladevorgang verbessert.

Diese Aufgabe wird durch ein Frachtladesystem nach dem Patentanspruch 1 gelöst.

Ein wesentlicher Punkt der Erfindung liegt darin, dass eine oder eine Vielzahl von solchen Messrollen, die mit Bremseinrichtungen versehen sind, als eigenständige Funktionseinheiten betrachtet werden, z. B. als solche, welche praktisch ausschließlich zum Abbremsen und/oder Halten von Gegenständen dienen. Es können ihnen auch verschiedene Zwecke zugeordnet werden. Beispielsweise können einzelne oder Gruppen von Messrollen zunächst zur Ermittlung des Containergewichts bei gleichzeitigem Halten oder Abbremsen eines Containers verwendet werden, oder aber als Geschwindigkeitssensoren, welche zum Regeln der Antriebsgeschwindigkeit der Antriebsrolleneinheiten dienen. Vorzugsweise sind die Bremseinrichtungen der Messrollen mittels der Bedieneinrichtung steuerbar. Zusätzlich können hier auch Automatik-Funktionen vorgesehen werden, um beispielsweise ein automatisches Abbremsen von zu schnell (insbesondere von Hand) beförderten Gegenständen sicherzustellen, damit keine Beschädigungen im Frachtraum und an den Containern auftreten.

Es ist vorzugsweise mindestens ein Messfühler derart ausgebildet und mit der Messrolle verbunden, bzw. in dieser angebracht, dass deren Umfangsgeschwindigkeit und/oder eine im wesentlichen vertikal zum Frachtdeck auf sie wirkende Last und/oder eine bei einem Abbremsen der Messrolle auf sie wirkende horizontale Kraft bzw. ein entsprechendes Drehmoment in Messsignale umgeformt werden. Vorzugsweise ist eine Steuerung vorgesehen, der die Messsignale zugeführt werden und die mit einem Antriebsmotor oder mehreren Antriebsmotoren im Frachtdeck eingebauter Antriebsrolleneinheiten in steuernder bzw. regelnder Verbindung steht. Die Steuerung ist derart ausgebildet, dass die Antriebsmotoren entsprechend den Messsignalen gesteuert bzw. hinsichtlich Drehzahl und/oder Drehmoment geregelt werden. Vorzugsweise sind hierbei mehrere Sensoreinrichtungen vorgesehen, um die Bewegung der Gegenstände im gesamten Frachtraum überwachen zu können.

Wenn eine Sensoreinrichtung bzw. Messrolle einer Rollenantriebseinheit räumlich eng zugeordnet ist, so kann sie bei entsprechender Ausrüstung mit einem Drehzahlfühler verwendet werden, um die Drehzahl des zur zugehörigen Rollenantriebseinheit gehörenden Antriebsmotors so zu regeln, dass zwischen der Antriebsrolle und der Unterseite des zu befördernden Gegenstands kein Schlupf auftritt. Dies wird ganz einfach dadurch bewerkstelligt, dass der Antriebsmotor auf eine derartige Drehzahl geregelt wird, dass die Umfangsgeschwindigkeit der Antriebsrolle der Umfangsgeschwindigkeit der Messrolle entspricht. Weiterhin ist es möglich, bei Verwendung von mindestens zwei in Transportrichtung gesehen nacheinander liegenden Sensoren (z. B. Reflexionslichtschranken) anstelle der Messrolle einen Geschwindigkeitswert zu errechnen und diesem Geschwindigkeitswert entsprechend den Antriebsmotor der vom Gegenstand als nächstes erreichten Rollenantriebseinheit so einzustellen, dass die Umfangsgeschwindigkeit der zugeordneten Antriebsrolle im wesentlichen dieser Geschwindigkeit entspricht bzw. (wenn man den Gegenstand beschleunigen will) ein wenig höher oder (wenn man den Gegenstand verzögern will) ein wenig niedriger liegt.

Bei einer bevorzugten Ausführungsform der Erfindung ist die Steuerung derart ausgebildet, dass die maximale Fördergeschwindigkeit eines Gegenstands entsprechend seinem Gewicht bzw. seiner Masse derart eingestellt wird, dass schwere Gegenstände mit niedrigerer Maximalgeschwindigkeit als leichtere Gegenstände gefördert werden. Das Gewicht bzw. die Masse des zu befördernden Gegenstands könnte als Vorgabewert manuell eingegeben werden, jedoch ist dies relativ zeitraubend. Es wird darum vorgeschlagen, mindestens einen Lastsensor im Einfahrbereich zum Frachtraum vorzusehen, mittels dessen die Masse (das Gewicht) des zu befördernden Gegenstands bestimmt wird. Entsprechend diesem Vorgabewert werden dann die Antriebsrolleneinheiten mit höheren oder niedrigeren Beschleunigungen bzw. Geschwindigkeiten betrieben, so dass einerseits die Beladungsgeschwindigkeit erhöht, andererseits die Gefahr von Kollisions-Beschädigungen bei Abbremsfehlern verringert wird.

Bei einer anderen Ausführungsform der Erfindung werden zur Bestimmung des Gewichts bzw. der Masse der zu befördernden Gegenstände die bei ihrer Beschleunigung wirkenden Kräfte gemessen, woraus dann die interessierenden Werte herleitbar sind. Dies kann zum einen dadurch geschehen, dass man die Momente misst, welche auf die Antriebsrollen beim Beschleunigen der Gegenstände wirken oder aber man stattet die Messrollen mit Bremsen aus und misst die beim Abbremsen bewegter Gegenstände wirkenden Kräfte. Im letzteren Fall, also bei einer mit einer Bremse ausgestatteten Messrolle wird diese vorzugsweise beim Abbremsen eines bewegten Gegenstands bzw. zum Halten eines Gegenstands (z. B. bei geneigtem Frachtdeck) mit einer Bremskraft beaufschlagt, deren Höhe in Abhängigkeit vom Gewicht bzw. der Masse des abzubremsenden bzw. zu haltenden Gegenstands eingestellt wird. Auf diese Weise ist es möglich, die zum Abbremsen oder Halten benötigte elektrische Energie aus dem Flugzeug-Bordnetz ebenso zu minimieren wie die mechanische und thermische Belastung der Messrolle bzw. deren Bremse.

Bei einer Ausführungsform der Erfindung, bei welcher die Antriebsrolle in ihrer vertikalen Relativposition zum Frachtdeck einstellbar ist, wird die Steuerung derart ausgebildet, dass die Relativposition der Antriebsrolle in Abhängigkeit von einer Struktur und/oder Belastbarkeit der Unterseite des gerade geförderten Gegenstands eingestellt wird. Hierbei wird beispielsweise die maximal erlaubte Kraft auf den Boden des zu befördernden Gegenstands durch die Antriebsrolleneinheit gebracht, wozu diese (zunächst) immer bis zur maximal erlaubten Aufstellkraft aus ihrer unteren Ruheposition in ihre obere Arbeitsposition aufgestellt werden. Sobald ein Beam (Shoring) erkannt wird, wird die Antriebsrolle nach unten gefahren und danach wieder zum maximalen Grenzwert hochgefahren. Insbesondere zum Beladen mit Paletten ist dies hilfreich.

Die Sensoreinrichtungen bzw. Messrollen, welche Antriebsrolleneinheiten direkt räumlich zugeordnet, insbesondere in Transportrichtung vor und/oder nach der Antriebsrolle angeordnet sind, werden bei einer Ausführungsform der Erfindung dazu verwendet, die Antriebsrolle bei Ankunft eines Gegenstands an den Sensoreinrichtungen, insbesondere der Messrolle bzw. bei Verlassen der Messrolle anzuheben bzw. abzusenken.

Bei einer Ausführungsform der Erfindung ist die Messrolle als gesondert im Frachtdeck montierbare Einrichtung ausgebildet.

Die Bedieneinrichtung umfasst vorzugsweise eine Fernsteuerung, so dass eine Bedienungsperson einen Container bei seinem Weg durch den Frachtraum bis zu seinem Aufstellort (und wieder hinaus) begleiten kann. Dadurch ist eine verbesserte Führung des Containers sowohl durch direkte Beobachtung als auch durch Mithilfe von Hand gewährleistet. Bei einer Ausführungsform der Erfindung umfasst die Bedieneinrichtung ein in üblicher Weise am Flugzeug befestigtes Steuerpult, welches aber einen Aufnahmeraum zur lösbaren Befestigung und Aufbewahrung der Fernsteuerung aufweist, wobei der Aufnahmeraum derart geformt ist, dass an der Fernsteuerung vorgesehene Bedienelemente bei im Aufnahmeraum deponierter Fernsteuerung unzugänglich sind. Bei Herausnehmen der Fernsteuerung kann man das Steuerpult deaktivieren, so dass keine widersprüchlichen Befehle gegeben werden können.

Bevorzugte Ausführungsformen der Erfindung ergeben sich aus den Unteransprüchen und der nachfolgenden Beschreibung von Beispielen, die anhand von Abbildungen näher erläutert werden. Hierbei zeigen:
- Fig. 1: eine perspektivische Darstellung einer Kombination aus Antriebsrolleneinheit, Lastrolle und Messrolle,
- Fig. 2: eine Darstellung der Anordnung nach Fig. 1 in einem Blickwinkel entsprechend dem Pfeil II aus Fig. 1,
- Fig. 3: eine schematisierte Darstellung der Verschaltung einer Steuerung mit Sensoreinrichtungen und Rollenantriebseinheiten,
- Fig. 4: eine Darstellung ähnlich der nach Fig. 1 jedoch einer anderen Anordnungsweise der verschiedenen Einheiten,
- Fig. 5: eine Draufsicht auf die Anordnung nach Fig. 4,
- Fig. 6: eine Seitenansicht auf die Anordnung nach Fig. 4 aus dem Blickwinkel gemäß dem Pfeil VI aus Fig. 4,
- Fig. 7: eine perspektivische Darstellung einer Bedieneinrichtung,
- Fig. 8: eine schematisierte Teil-Schnitt-Darstellung einer schwenkbaren und anhebbaren Rollenantriebseinheit, und
- Fig. 9: eine Draufsicht auf die Rollenantriebseinheit nach Fig. 8.

In der nachfolgenden Beschreibung werden für gleiche und gleichwirkende Teile dieselben Bezugsziffern verwendet.

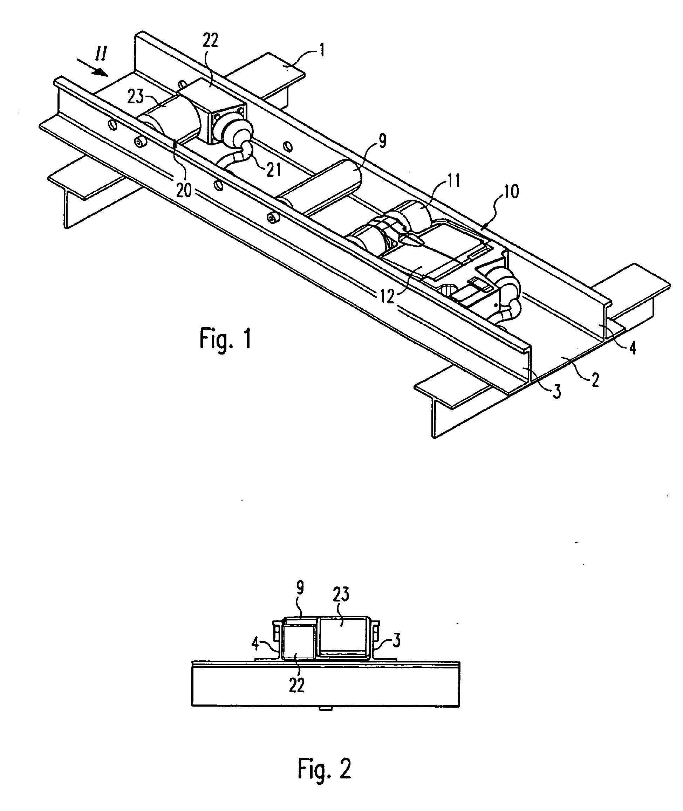

Bei der in Fig. 1 und Fig. 2 gezeigten Ausführungsform ist in einem Frachtdeck 1, von dem nur Querträger angedeutet sind, eine Aufnahmeschiene 2 mit Seitenschenkeln 3 und 4 angeordnet. Auf dem Boden der Aufnahmeschiene 2 ist mittels Schraubbolzen eine Antriebsrolleneinheit 10 befestigt, die eine (zweigeteilte) Antriebsrolle 11 aufweist, welche mittels eines Antriebsmotors 12 gedreht werden kann. Die Antriebsrolle 11 der Antriebsrolleneinheit 10 ist von einer Ruhestellung (gemäß Fig. 1) in eine angehobene Stellung anhebbar, in welcher die Antriebsrolle 11 mit einem über ihr befindlichen Gegenstand in reibschlüssigen Kontakt gebracht werden kann. Vorzugsweise wird als Rollenantriebseinheit eine solche verwendet, wie sie in der DE 197 19 160 beschrieben ist.

Weiterhin ist in der Aufnahmeschiene 2 eine Lastrolle 9 drehbar befestigt, die rein passiv ausgelegt ist.

Schließlich ist in der Aufnahmeschiene 2 eine Messrolle 20 befestigt, die einen Sockel 22, eine an diesem befestigte Rolle 23 sowie eine Anschlussleitung 21 aufweist, über welche eine (nicht gezeigte) Bremse zum Abbremsen der Rolle 23 ansteuerbar ist und in welcher Messsignale übertragen werden, die von (nicht gezeigten) Sensoren erzeugt werden. Diese Sensoren sind nun zum einen ein Drehzahlfühler, der Messsignale liefert, welcher der Drehzahl bzw. der Umfangsgeschwindigkeit der Rolle 23 entsprechen. Weiterhin sind zwei Kraftsensoren vorgesehen, wovon der eine eine auf die Rolle 23 vertikal wirkende Last und der andere eine horizontale (in Richtung des Pfeiles II) wirkende Last bzw. ein Bremsmoment erfasst, das beim Abbremsen der Rolle 23 entsteht, wenn sich über diese ein beförderter Gegenstand bewegt und abgebremst wird.

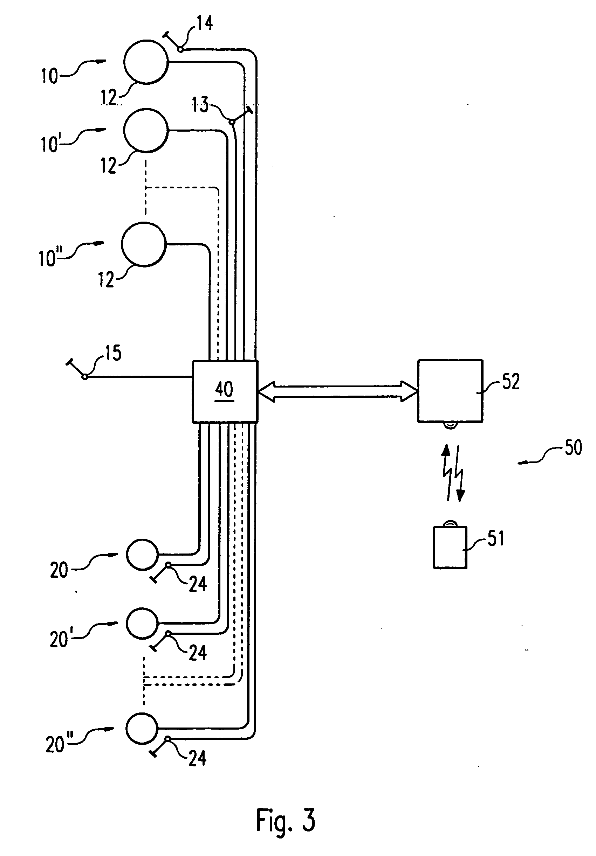

Wie in Fig. 3 gezeigt, stehen mehrere Antriebsrolleneinheiten 10, 10', 10" bzw. deren Antriebsmotoren 12 mit einer Steuerung 40 derart in Verbindung, dass die Steuerung 40 die Antriebsmotoren 12 ansteuern kann. Es sind weiterhin ein Stromsensor 13 zum Feststellen der vom Antriebsmotor 12 erzeugten Vortriebskraft zum Befördern eines Gegenstands sowie ein Drehzahlsensor 14 vorgesehen, der die Umfangsgeschwindigkeit der Antriebsrolle 11 feststellt und ein entsprechendes Signal an die Steuerung 40 liefert.

Die Steuerung 40 ist weiterhin mit mehreren Messrollen 20, 20', 20" verbunden, die mit Bremseinrichtungen versehen sind, welche von der Steuerung 40 angesteuert werden können. Den Messrollen 20, 20', 20" sind Messfühler 24 zugeordnet, wie sie zuvor gerade beschrieben wurden. Je nach Einsatzzweck kann also eine Messrolle 20 mit einem einzeln oder aber auch mit mehreren Fühlern je nach Verwendungszweck versehen sein. Zusätzlich kann ein Lastmessfühler 15 (oder Gruppen hiervon) vorgesehen sein, um beispielsweise das Gewicht eines zu befördernden Gegenstands zu bestimmen.

Die Steuerung 40 ist mit einer Bedieneinrichtung 50 verbunden, welche ein im Flugzeug fest montiertes Steuerpult 52 sowie eine Fernsteuerung 51 umfasst, so dass die Bedieneinrichtung 50 alternativ an einem bestimmten Ort oder aber über die Fernsteuerung 51 bedient werden kann.

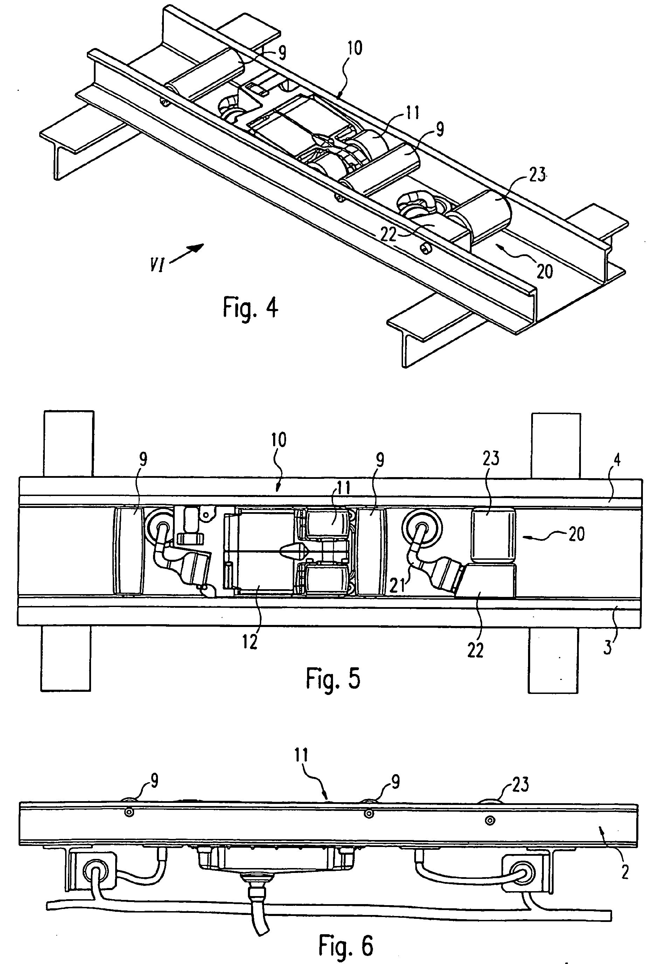

Die in den Fig. 4, 5 und 6 gezeigte Ausführungsform der Erfindung unterscheidet sich von der nach den Fig. 1 und 2 dadurch, dass zum einen ein erheblich engerer Aufbau vorliegt, bei welchem die Messrolle 20 in sehr enger räumlicher Beziehung zur Antriebsrolleneinheit 10 steht. Dadurch ist eine besonders exakte Antischlupfregelung sowie Aufstellsteuerung der Antriebsrolleneinheit 10 möglich. Weiterhin weist diese Ausführungsform eine weitere (passive) Rolle 9 auf, so dass ein über die Anordnung fahrender Container auch bei vollständig abgesenkter Antriebsrolle 11 der Antriebsrolleneinheit 10 sicher gelagert ist.

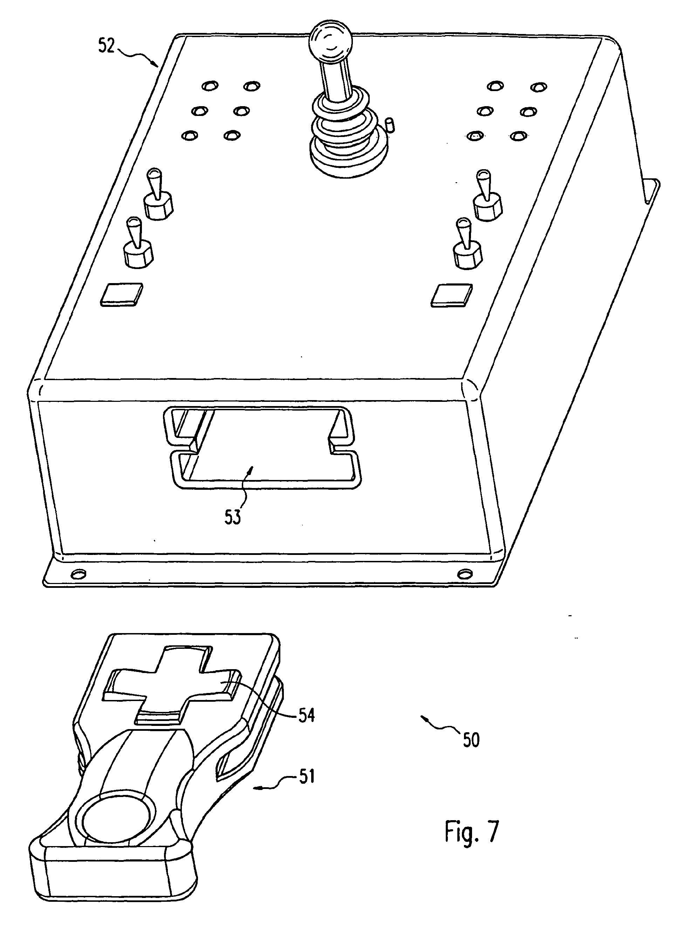

In Fig. 7 ist eine Bedieneinrichtung 50 dargestellt, welche ein (ortsfest zu montierendes) Steuerpult 52 sowie eine Fernsteuerung 51 aufweist. Die Fernsteuerung 51 kann in einen Aufnahmeraum 53 des Steuerpultes 52 eingesetzt werden, wenn man sie nicht benötigt. In diesem Fall ist ein auf der Fernsteuerung 51 vorgesehenes Bedienelement 54 im Aufnahmeraum 53 verborgen, so dass zur Bedienung nur noch die auf dem Steuerpult 52 vorgesehenen Bedienungselemente benützt werden können. Vorzugsweise ist innerhalb des Steuerpultes 52 bzw. in dessen Aufnahmeraum 53 ein Schalter vorgesehen und derart ausgebildet, dass bei einem Herausnehmen der Fernsteuerung 51 die Bedienelemente des Steuerpultes 52 deaktiviert werden.

Die mit Pfeilen in Fig. 3 angedeutete Verbindung kann zwischen der Fernsteuerung 51 und dem Steuerpult 52 erfolgen. Bei einer bevorzugten Ausführungsform der Erfindung wird jedoch das Signal über die Steuerleitungen der im Frachtraum montierten Antriebsrolleneinheiten an die Steuerung 40 übermittelt. Hierfür werden die üblicherweise an Antriebsrolleneinheiten montierten Infrarotsensoren (dort zur Detektion von zu befördernden Gegenständen in Lichtschranken angeordnet) verwendet, denen Infrarotsignale aus einem entsprechenden Infrarotsender der Fernbedienung 51 übermittelt werden. Hierbei wird eine Trennung der von der Fernsteuerung übermittelten Signale von den Signalen, welche an sich von diesen Infrarot(-Lichtschranken)Sensoren aufgenommen werden, durch eine entsprechende Codierung und Filterung vorgenommen. Auf diese Weise ist es möglich, nicht nur Sensoren zu sparen, da diese ohnehin im Flugzeug (in den Antriebsrolleneinheiten) vorgesehen sind, vielmehr gelingt es dadurch auch, über das gesamte Frachtdeck des Flugzeugs verteilte "Empfangsstationen" für die Fernsteuerung zu schaffen, so dass einerseits ein optimaler Empfang bzw. eine optimale Fernsteuerung sichergestellt, andererseits aufwendige, teuere, schwergewichtige und anfällige Verkabelungen gespart werden können.

Die soeben beschriebene Idee einer Fernsteuerung mit verteilten Empfängern, die durch an sich für Lichtschranken vorgesehene Empfänger gebildet sind, wird für selbständig erfinderisch gehalten.

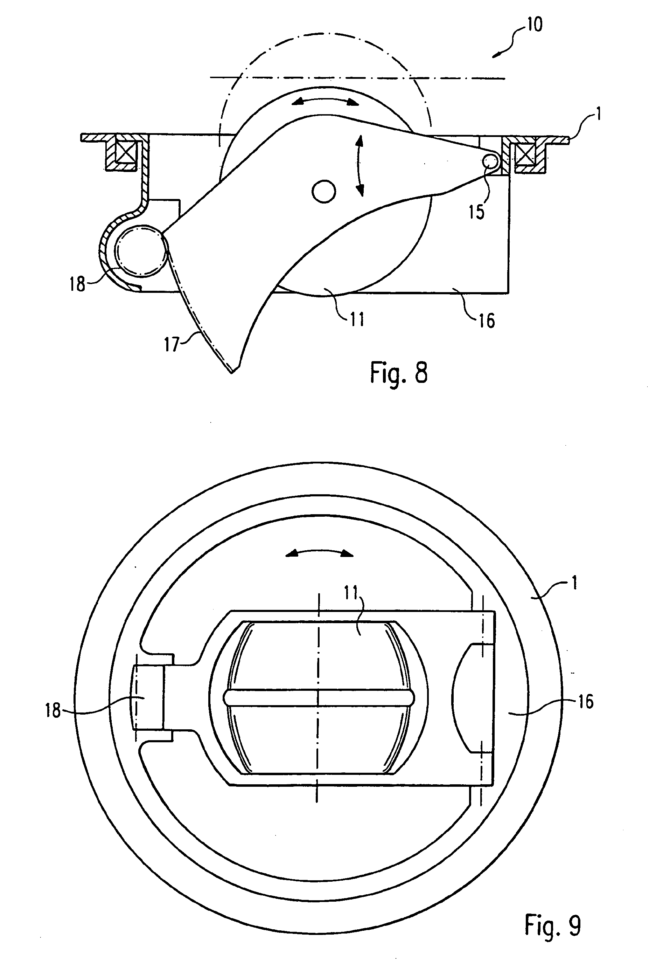

In den Fig. 8 und 9 ist eine Ausführungsform einer Antriebsrolleneinheit gezeigt, welche einen topfförmigen Rahmen 16 aufweist, der über ein Lager im Frachtdeck 1 gelagert ist. Innerhalb des topfförmigen Rahmens 16 ist ein einarmiger Hebel bzw. eine Wippe 17 um eine horizontale Achse schwenkbar befestigt, wobei die Achse gleichzeitig einen Kraftmessfühler 15 bildet bzw. mitumfasst. Die Wippe 17 kann über einen Hubmotor 18 hochgehoben werden, so dass die Antriebsrolle 11 aus einer abgesenkten Ruhestellung in eine angehobene Arbeitsstellung (durch die unterbrochene Linie dargestellt) verschwenkt werden kann. Mit der horizontalen strichpunktierten Linie ist die Ebene gezeigt, in welcher die unangetriebenen Rollen 9 sowie die Messrollen 20 mit ihren Oberflächen liegen. In derselben Ebene liegen demzufolge auch die tiefsten Punkte der zu befördernden Gegenstände (von schadenbedingten Ausnahmen abgesehen).

Aus obiger Beschreibung geht hervor, dass der Idee einer selbständigen Messrolle, welche mit einer steuerbaren Bremse ausgestattet ist, ein selbständiger erfinderischer Gehalt beigemessen wird. Eine derartige Mess- und Bremsrolle kann in vielfältiger Weise auch zusätzlich zu schon vorhandenen Antriebseinheiten oder auch in Kugelmatten oder dergleichen verwendet werden.

Weiterhin ergibt sich aus obigem, dass die Erfindung auch ein Verfahren zum Befördern von Containern betrifft, wobei die oben offenbarten Merkmale insbesondere hinsichtlich der auf die Masse der zu befördernden Gegenstände bezogenen (unterschiedlichen) Fördergeschwindigkeiten und Förderbeschleunigungen für relevant erachtet werden.

Die besondere Form der Bedieneinrichtung mit Fernsteuerung wird ebenfalls für sich alleine gesehen als erfinderisch beansprucht.

### Bezugszeichenliste

- 1: Frachtdeck
- 2: Aufnahmeschiene
- 3: Schenkel
- 4: Schenkel
- 9: Rolle
- 10: Antriebsrolleneinheit
- 11: Antriebsrolle
- 12: Antriebsmotor
- 13: Drehmomentfühler
- 14: Drehzahlfühler
- 15: Lastmessfühler
- 16: Rahmen
- 17: Wippe
- 18: Hubmotor
- 20: Messrolle
- 21: Anschlussleitung
- 22: Sockel
- 23: Rolle
- 24: Messfühler
- 40: Steuerung
- 50: Bedieneinrichtung
- 51: Fernsteuerung
- 52: Steuerpult
- 53: Aufnahmeraum
- 54: Bedienelement

## Patentansprüche

1. Frachtladesystem mit mindestens einer Antriebsrolleneinheit (10, 10', 10") zum Fördern von Gegenständen insbesondere Containern, Paletten oder dergleichen auf einem Frachtdeck (1) eines Flugzeuges, wobei die Antriebsrolleneinheit (10) mindestens eine Antriebsrolle (11) umfasst, die mit einem steuerbaren Antriebsmotor (12) in Wirkverbindung steht und die mit einer Unterseite des Gegenstands in Eingriff bringbar ist,
mit mindestens einer Messrolle (20), die ebenfalls mit der Unterseite des Gegenstands in Verbindung bringbar ist, mit mindestens einem Messfühler, der derart ausgebildet und mit der Messrolle verbunden bzw. in der Messrolle angebracht ist, dass deren Umfangsgeschwindigkeit und/oder eine im wesentlichen vertikal zum Frachtdeck (1) auf sie wirkende Last und/oder eine bei einem Abbremsen der Messrolle (20) auf sie wirkende horizontale Kraft bzw. ein entsprechendes Drehmoment in Messsignale umgeformt werden,
**dadurch gekennzeichnet, dass** die Messrolle mit einer steuerbaren Bremseinrichtung versehen ist, welche insbesondere mittels einer Bedieneinrichtung (50) steuerbar ist.

2. Frachtladesystem nach Anspruch 1, **gekennzeichnet durch** eine Steuerung (40), der die Messsignale zugeführt werden und die mit einem oder mehreren Antriebsmotoren (12) im Frachtdeck eingebauter Antriebsrolleneinheiten (10) in steuernder oder regelnder Verbindung steht, wobei die Steuerung (40) derart ausgebildet ist, dass die Antriebsmotoren (12) entsprechend den Messsignalen gesteuert bzw. hinsichtlich Drehzahl und/oder Drehmoment geregelt werden.

3. Frachtladesystem nach einem der vorhergehenden Ansprüche, **dadurch gekennzeichnet, dass** die Messrolle (20) als gesonderte im Frachtdeck (1) montierbare Einrichtung ausgebildet ist.

4. Frachtladesystem nach einem der vorgehenden Ansprüche, **dadurch gekennzeichnet, dass** die Steuerung (40) derart ausgebildet ist, dass die Drehzahl des Antriebsmotors (12) zur Vermeidung eines Schlupfes zwischen der Unterseite des Gegenstands und der Antriebsrolle (11) entsprechend Signalen der Sensoreinrichtung bzw. der Umfangsgeschwindigkeit der Messrolle (20) geregelt wird.

5. Frachtladesystem nach einem der vorhergehenden Ansprüche, **dadurch gekennzeichnet, dass** die Steuerung (40) derart ausgebildet ist, dass die maximale Fördergeschwindigkeit eines Gegenstands entsprechend seinem Gewicht bzw. seiner Masse derart eingestellt wird, dass schwerere Gegenstände mit niedrigeren Maximalgeschwindigkeiten als leichtere Gegenstände gefördert werden.

6. Frachtladesystem nach einem der vorhergehenden Ansprüche, **dadurch gekennzeichnet, dass** die Steuerung (40) derart ausgebildet ist, dass eine auf die Antriebsrolle (12) und/oder auf die Messrolle (20) wirkende Bremse mit steigendem Gewicht bzw. steigender Masse des Gegenstandes mit einer steigenden Bremskraft zum Abbremsen eines sich bewegenden und/oder Halten eines stehenden Gegenstandes beaufschlagt wird.

7. Frachtladesystem nach einem der vorhergehenden Ansprüche, **dadurch gekennzeichnet, dass** die Antriebsrolle (11) in ihrer vertikalen Relativposition zum Frachtdeck (1) einstellbar ist und dass die Steuerung (40) derart ausgebildet ist, dass die Relativposition der Antriebsrolle (11) in Abhängigkeit von einer Struktur und/oder Belastbarkeit der Unterseite des gerade geförderten Gegenstands eingestellt wird.

8. Frachtladesystem nach einem der vorhergehenden Ansprüche, **dadurch gekennzeichnet, dass** die Steuerung (40) derart ausgebildet ist, dass die Gegenstände mit vorgegebenen Beschleunigungswerten beschleunigt bzw. abgebremst werden.

9. Frachtladesystem nach einem der vorhergehenden Ansprüche, **dadurch gekennzeichnet, dass** die Messrolle (20) derart relativ zur Antriebsrolle (12) in Transportrichtung positioniert ist, dass die Antriebsrolle (12) bei Ankunft eines Gegenstands an der Sensoreinrichtung bzw. Messrolle (20) bzw. bei Verlassen der Sensoreinrichtung bzw. Messrolle (20) angehoben bzw. abgesenkt wird.

10. Frachtladesystem nach einem der vorhergehenden Ansprüche, **dadurch gekennzeichnet, dass** die Bedieneinrichtung (50) eine Fernsteuerung (51) umfasst, wobei vorzugsweise die Bedieneinrichtung (50) ein am Flugzeug befestigtes Steuerpult (52) umfasst, welches einen Aufnahmeraum (53) zum lösbaren Befestigen und Aufbewahren der Fernsteuerung (51) aufweist, wobei der Aufnahmeraum (53) vorzugsweise derart geformt ist, dass an der Fernsteuerung (51) vorgesehene Bedienelemente (54) bei im Aufnahmeraum (53) deponierter Fernsteuerung (51) unzugänglich sind.

## Claims

1. Cargo loading system having at least one drive roller unit (10, 10', 10") for transporting articles, especially containers, pallets or the like, on a cargo deck (1) of an aircraft, the drive roller unit (10) comprising at least one drive roller (11) which is in operative connection with a controllable drive motor (12) and which is arranged to be brought into engagement with the underside of the article,
having at least one measuring roller (20), which is likewise arranged to be brought into connection with the underside of the article, having at least one measuring sensor, which is so constructed and joined to the measuring roller or mounted in the measuring roller that the circumferential speed thereof and/or a load acting thereon substantially vertically with respect to the cargo deck (1) and/or a horizontal force acting thereon during braking of the measuring roller (20) or a corresponding turning moment are converted into measurement signals,
**characterized in that** the measuring roller is provided with a controllable braking device which is controllable especially by means of an operating device (50).

2. Cargo loading system according to claim 1, **characterized by** a controller (40) to which the measurement signals are supplied and which is in open-loop or closed-loop controlling connection with one or more drive motors (12) of drive roller units (10) installed in the cargo deck, the controller (40) being arranged in such a way that, in accordance with the measurement signals, the drive motors (12) are subjected to open-loop control or to closed-loop control in respect of rotational speed and/or turning moment.

3. Cargo loading system according to either one of the preceding claims, **characterized in that** the measuring roller (20) is in the form of a separate device mountable in the cargo deck (1).

4. Cargo loading system according to any one of the preceding claims, **characterized in that** the controller (40) is arranged in such a way that, in order to avoid slip between the underside of the article and the drive roller (11), the rotational speed of the drive motor (12) is subjected to closed-loop control in accordance with signals of the sensor device or the circumferential speed of the measuring roller (20).

5. Cargo loading system according to any one of the preceding claims, **characterized in that** the controller (40) is arranged in such a way that the maximum transport speed of an article is set in accordance with its weight or its mass in such a way that heavier articles are transported at lower maximum speeds than lighter articles.

6. Cargo loading system according to any one of the preceding claims, **characterized in that** the controller (40) is arranged in such a way that with increased weight or mass of the article a brake acting on the drive roller (12) and/or on the measuring roller (20) is acted upon by an increased braking force for braking a moving article and/or holding a stationary article.

7. Cargo loading system according to any one of the preceding claims, **characterized in that** the vertical position of the drive roller (11) relative to the cargo deck (1) is adjustable, and the controller (40) is arranged in such a way that the relative position of the drive roller (11) is set in dependence upon the structure and/or load-bearing capacity of the underside of the article being transported.

8. Cargo loading system according to any one of the preceding claims, **characterized in that** the controller (40) is arranged in such a way that the articles are accelerated or braked at preset acceleration values.

9. Cargo loading system according to any one of the preceding claims, **characterized in that** the position of the measuring roller (20) relative to the drive roller (12) in the transport direction is such that the drive roller (12), on arrival of an article at the sensor device or measuring roller (20) or on leaving the sensor device or measuring roller (20), is raised or lowered, respectively.

10. Cargo loading system according to any one of the preceding claims, **characterized in that** the operating device (50) comprises a remote controller (51), the operating device (50) preferably comprising a control console (52) mounted on the aircraft, which control console has a housing space (53) for the releasable attachment and storage of the remote controller (51), the housing space (53) preferably being of a shape such that operating elements (54) provided on the remote controller (51) are inaccessible when the remote controller (51) has been deposited in the housing space (53).

## Revendications

1. Système de chargement de marchandises comprenant au moins une unité de rouleaux d'entraînement (10, 10', 10") pour le transport d'objets en particulier de conteneurs, de palettes ou similaires sur un pont de chargement (1) d'un avion, l'unité de rouleaux d'entraînement (10) comportant au moins un rouleau d'entraînement (11) qui est en liaison active avec un moteur d'entraînement pouvant être commandé (12) et qui peut être amené en engagement avec un côté inférieur de l'objet,
au moins un rouleau de mesure (20) qui peut aussi être amené en liaison avec le côté inférieur de l'objet, au moins un capteur de mesure qui est réalisé et relié ou monté dans le rouleau de mesure de telle manière que sa vitesse périphérique et/ou une charge agissant sensiblement verticalement au pont de chargement (1) sur ce rouleau et/ou une force horizontale agissant lors d'un freinage du rouleau de mesure (20) sur ce dernier ou un couple correspondant soit converti en signaux de mesure,
**caractérisé en ce que** le rouleau de mesure est pourvu d'un dispositif de freinage qui peut être commandé en particulier à l'aide d'un dispositif de commande (50).

2. Système de chargement de marchandises selon la revendication 1, **caractérisé par** une commande (40), à laquelle sont transférés les signaux de mesure et qui est en liaison de commande ou de régulation avec un ou plusieurs moteurs d'entraînement (12) des unités de rouleaux d'entraînement (10) intégrées au pont de chargement, la commande (40) étant réalisée de telle manière que le régime et/ou le couple des moteurs d'entraînement (12) soit commandé ou régulé selon les signaux de mesure.

3. Système de chargement de marchandises selon l'une quelconque des revendications précédentes, **caractérisé en ce que** le rouleau de mesure (20) est réalisé comme un dispositif séparé, pouvant être monté dans le pont de chargement (1).

4. Système de chargement de marchandises selon l'une quelconque des revendications précédentes, **caractérisé en ce que** la commande (40) est réalisée de telle manière que le régime du moteur d'entraînement (12) soit régulé, pour éviter un glissement entre le côté inférieur de l'objet et le rouleau d'entraînement (11), selon des signaux du dispositif de détection ou la vitesse périphérique du rouleau de mesure (20).

5. Système de chargement de marchandises selon l'une quelconque des revendications précédentes, **caractérisé en ce que** la commande (40) est réalisée de telle manière que la vitesse de transport maximale d'un objet soit réglée selon son poids ou sa masse à tel point que des objets plus lourds soient transportés à des vitesses maximales plus basses que des objets plus légers.

6. Système de chargement de marchandises selon l'une quelconque des revendications précédentes, **caractérisé en ce que** la commande (40) est réalisée de telle manière qu'un frein agissant sur le rouleau d'entraînement (12) et/ou sur le rouleau de mesure (20) soit alimenté, lorsque le poids ou la masse de l'objet croît, en une force de freinage croissante pour le freinage d'un objet se déplaçant et/ou le maintien d'un objet immobile.

7. Système de chargement de marchandises selon l'une quelconque des revendications précédentes, **caractérisé en ce que** le rouleau d'entraînement (11) peut être réglé dans sa position relative verticale par rapport au pont de chargement (1) et **en ce que** la commande (40) est réalisée de telle manière que la position relative du rouleau d'entraînement (11) soit réglée en fonction d'une structure et/ou d'une capacité de charge du côté inférieur de l'objet justement transporté.

8. Système de chargement de marchandises selon l'une quelconque des revendications précédentes, **caractérisé en ce que** la commande (40) est réalisée de telle manière que les objets soient accélérés ou freinés avec des valeurs d'accélération prescrites.

9. Système de chargement de marchandises selon l'une quelconque des revendications précédentes, **caractérisé en ce que** le rouleau de mesure (20) est positionné par rapport au rouleau d'entraînement (12) dans le sens de transport de telle manière que le rouleau d'entraînement (12) soit levé ou abaissé lors de l'arrivée d'un objet sur le dispositif de détection ou le rouleau de mesure (20) ou lors de la sortie du dispositif de détection ou du rouleau de mesure (20).

10. Système de chargement de marchandises selon l'une quelconque des revendications précédentes, **caractérisé en ce que** le dispositif de commande (50) comporte une télécommande (51), le dispositif de commande (50) comportant de préférence un pupitre de commande (52) fixé sur l'avion, qui présente un espace de réception (53) pour la fixation amovible et la conservation de la télécommande (51), l'espace de réception (53) étant formé de préférence de telle manière que des éléments de commande prévus sur la télécommande (51) soient inaccessibles lorsque la télécommande (51) est déposée dans l'espace de réception (53).
Die Erfindung betrifft...
